# EUROPEAN PATENT SPECIFICATION

(11) **EP 0 775 362 B1**
(45) Date of publication and mention of the grant of the patent: **10.05.2000**
(21) Application number: 95928703.8
(22) Date of filing: 31.07.1995
(51) Int. Cl.: G11B 33/04

(54) **MODULAR STORAGE AND DISPLAY DEVICE**
BAUSTEINARTIGES LAGER-UND ANZEIGEELEMENT
DISPOSITIF MODULAIRE DE RANGEMENT ET PRESENTOIR

(30) Priority: 02.08.1994 IL 11054394
(43) Date of publication of application: 28.05.1997
(73) Proprietor: Lorentz, Hilel, 49375 Petach Tikva (IL); Levy, Rony, 69492 Tel Aviv (IL)
(72) Inventor: Lorentz, Hilel, 49375 Petach Tikva (IL); Levy, Rony, 69492 Tel Aviv (IL)
(74) Representative: Grünecker, Kinkeldey, Stockmair & Schwanhäusser Anwaltssozietät
(86) International application number: US9509707
(87) International publication number: WO9604657

(56) References cited:
- EP-A- 0 422 318
- WO-A-92/03823
- DE-A- 3 445 460
- DE-U- 9 107 451
- DE-U- 9 305 499
- GB-A- 2 239 595
- GB-A- 2 282 524

## Description

### FIELD OF THE INVENTION

The present invention is in the field of modular storage and display devices and more specifically it is concerned with a modular device for storing and displaying essentially flat containers.

### BACKGROUND OF THE INVENTION

Storage and display devices for flat containers such as for example, compact disk, video and audio cassette containers and the like, have always been a subject for designers. Such devices should be, on the one hand, functional enabling storage of a maximum number of objects in a minimum space and with optimal access to items contained within such containers and, on the other hand, should be pleasing to the eye.

An important and highly desired character required from such devices is that they should preferably be modular, i.e. to facilitate expansion of their capacity and alter the arrangement of the stored and displayed objects. A still further desirable feature is that such devices should be able to receive a variety of containers with varying dimensions and also containers holding more than one article e.g, containers holding two compact-disks.

Storage and display devices for such flat containers have been previously proposed. For example there are known box-like storage structures in which the containers are retained vertically within receiving slots. The disadvantage of all such structures is that the content of the containers is not visible and inspecting their contents is not possible without removal from the storage structure. Furthermore, such structures occupy a relatively large space as compared with total amount of the accommodated containers.

G.B. Patent specification No. 2,239,595 discloses a storage and display device comprising a base mounted column adapted to have mounted thereon several display units each of which holding an article to be displayed. According to this specification, each display unit is provided with an annular collar fitting around the column and a container gripping member attached to the collar and capable of rotation about a horizontal axis.

However, according to the disclosure of this specification, the contents of a stored container cannot be inspected without first removing the container from its gripping member. Another drawback of this prior disclosure is that it is not a modular structure. Thus, adding or rearranging the disks along the column requires removal of all the preceding containers.

It is therefore an object of the present invention to provide a new and improved modular storing and display device in which the above-referred to disadvantages are substantially reduced or overcome and the above-referred to *desiderata* are substantially fulfilled.

DE-U-9107451.7 discloses a device according to the preamble of claim 1 in which the connecting members are provided with an annular part for connecting them to the column - having, the above mentioned drawback that adding or rearranging the disks along the column requires removal of all the preceding containers.

### SUMMARY OF THE INVENTION

According to the present invention there is provided a modular storage and display device as defined in claim 1 for essentially flat containers comprising a vertically retained column and a plurality of connecting members mounted on said column, which connecting members are integrally formed at one portion thereof with a pair of resiliently displaceable gripping arms adapted to snap fit around the column so as to be rotatable around and slidable along a longitudinal axis of the column and at an opposed portion of the connector with means for horizontally retaining the container at any of its edges.

A typical container with which the present invention is concerned comprises a base member having two side walls, a front wall and a rear wall, with a flap hinged adjacent a rear end thereof. Such containers are typically used for storage of compact disks, video and audio cassettes and the like.

According to one embodiment, the retaining means of said connecting member consists of a U-shaped structure formed of a top and a bottom essentially horizontally extending supports, the distance between said supports being essentially equal to the thickness of the container, the rear support being provided adjacent a rear wall of said retaining means with a grove suitable for snappingly receiving a ridge vertically projecting from an edge of the base member; the arrangement being such that a rear edge portion of said container is retained between said flat supports and the rear wall of said container bears against the rear wall of said retaining means.

According to a preferred embodiment, said retaining means has a U-like structure formed of a top and a bottom essentially horizontally extending support, said top support comprising a groove suited for receiving a top edge of the container's front face, the arrangement being such that said front face is engaged by said retaining means with the front face thereof bearing against a rear wall of said retaining means and with the container's hinged flap closing on said top support.

By one application, the connecting members according to the present invention are provided with attachment means for fixing the container to said connecting member. Said attachment means may be for example an adhesive portion, a hook and pile fastener portion (known as VELCRO ®), or a fastening screw.

According to the present invention there is also provided for use in a modular storage and display device for essentially flat containers such as compact disk, video and audio cassette containers and the like, a connecting member as defined in claim 20 which comprises a resilient attachment for snapping attachment to a substantially vertical column so as to be rotatable around and slidable along a longitudinal axis of said column and retaining means for retainig one such container at a front, rear or seide wall of the container, where the container is horizontally retained and opening of the flap and removal of the container's content is enabled while the container is retained by the connecting member.

In accordance with a preferred embodiment, there is also provided for use in a modular storage and display device for essentially flat containers such as compact disk, video and audio cassette containers and the like, a connecting member caharacterized in that said retainig means consist of a top and a bottom essentially horizontally extending flat supports, said top support comprising a groove adapted for receiving a top edge of a front face of said container, the arrangement being such that a non-hinged edge of said container is engaged with said retaining means with the front face thereof bearing against the rear wall of the retainig means and with the container's hinged flap closing on said top support, wherein the container is horizontally retained.

In still a preferred embodiment of the present invention, said rear wall of the retaining means comprises at each end thereof a lateral and substantially vertical projection for arresting the container between said projections and preventing movement of the container in a horizontal plane. Furthermore, said connecting member comprises at a top end thereof a longitudinal, horizontal protrusion, extending essentially the entire width of the container and having a slanted bottom surface adapted for snapping engagement with a top surface of the container's hinged flip cover, and for preventing dust from entering the container.

In still a preferred embodiment of the invention, said resiliently attachment member consists of an essentially annular cross-sectioned element made of resilient material and having an internal diameter similar to the diameter of said column and provided with at least one radial opening for snapingly receiving said column.

### DESCRIPTION OF THE DRAWINGS

For better understanding, the invention will now be described, by way of example only, with reference to the accompanying drawings in which:
**Fig. 1** is an exploded view of a floor model device according to the present invention with only two connecting members mounted for sake of clarity;
**Fig. 2** is a perspective view of the embodiment of Fig. 1 with flat containers accommodated in only some of the connecting members;
**Fig. 3** is a preferred embodiment of a connecting member according to the present application;
**Fig. 4** is another embodiment of a connecting member according to the present invention;
**Figs. 5(a)-5(e)** are various embodiments of a connecting member according to the present invention;
**Fig. 6** illustrates a compact-disk container gripped by a first embodiment connecting member with the flap in an open position;
**Fig. 7** illustrates how the connecting member is useful for gripping a new type double compact-disk container;
**Fig. 8** illustrates a compact-disk container gripped by a connecting member according to a second embodiment of the present invention with the flap in its open position;
**Fig. 9** is another embodiment of a connecting member according to the present invention;
**Fig. 10** illustrates a preferred embodiment of a connecting member in accordance with the present invention;
**Fig. 11** is a further embodiment of the present invention, in which the compact disk container is integrally formed with a connecting member.
**Fig. 12** illustrates a connecting member according to the present invention suitable for gripping an audio cassette container;
**Fig. 13** illustrates a wall mounted device according to the present invention;
**Fig. 14** illustrates a floor-to-ceiling device according to the present invention; and
**Fig. 15** is a partially exploded side view of a floor model of another embodiment according to the present invention with a section A shown in perspective view.

### DETAILED DESCRIPTION OF PREFERRED EMBODIMENTS

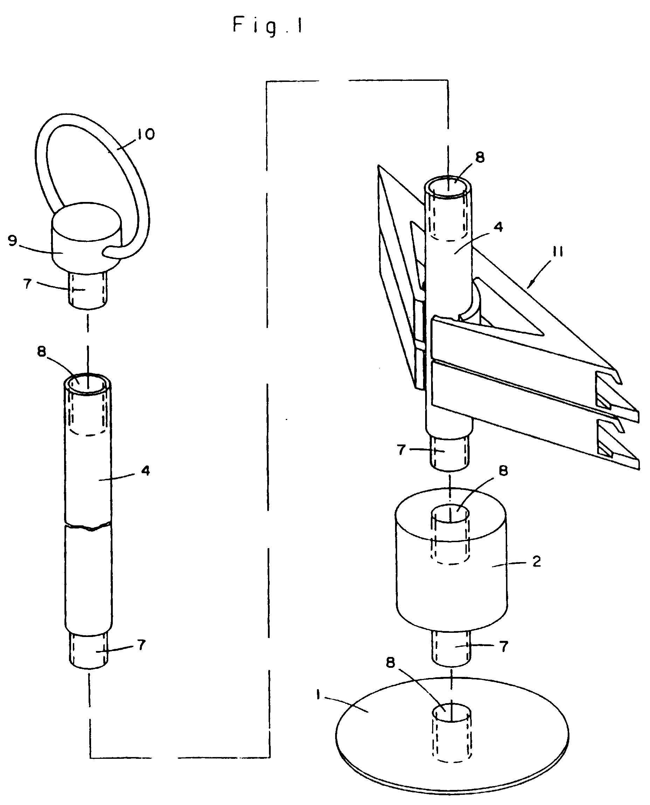

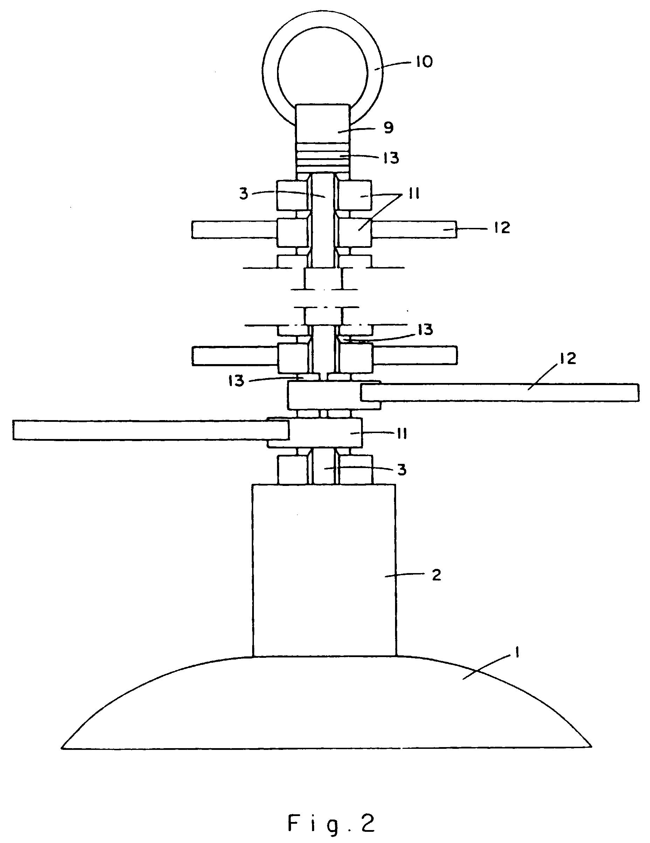

Reference is first made to Figs. 1 and 2 of the drawings in which a floor mounted device according to the present invention consists of a base member **1** into which is screw-engaged a lower limit member **2** into which is screw-engaged a column **3** consisting of several successive component columns **4**. The height limit member **2** and the component columns **4** are each provided at one end with a threaded shank **7** and at the other end with a threaded bore **8** suitable for receiving said threaded shank **7**.

An end piece **9** is fitted with a threaded shank **7** and a ring **10** suitable for lifting and transferring the device from place to place.

A plurality of connecting members **11** (only several seen in each of the Figs.) are snappingly mounted on the column **3** in a manner which will hereinafter be explained. Some of the connecting members **11** of Fig. 2 have containers **12** fitted to them as will be later explained in detail. As seen in Fig. 2 the purpose of the lower limit member **2** is to limit the location of the lowermost connecting member. Further seen in Fig. 2 are several spacers **13** filling the gap between the top-most connecting member **11** and the end piece **9**. Between each two adjacent connecting members there is also provided a spacer **13** for reducing friction between the rotatable connecting members **11**.

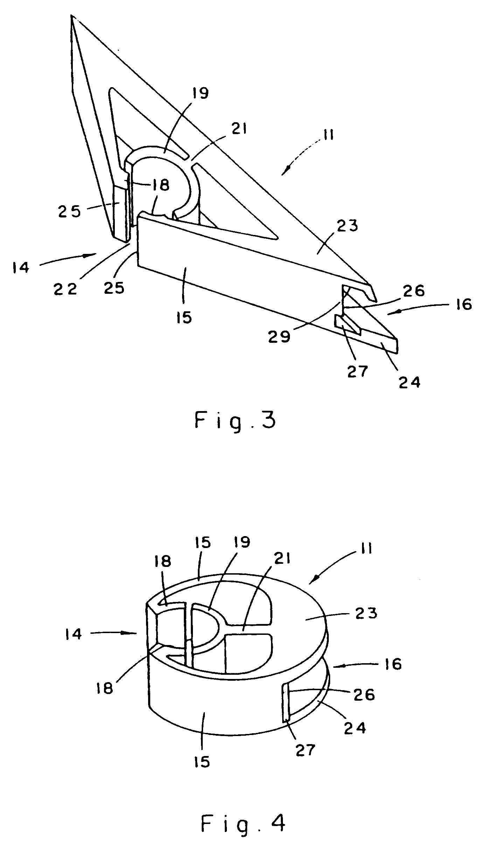

Fig. 3 of the drawings is a preferred embodiment of a connecting member **11** which for sake of example only, is designed for gripping a compact-disk container. The connecting member **11** has an essentially triangular cross-section shape, the base of said triangle having a length essentially similar to the width of the container to be attached thereto. The connecting member **11** is made of a resilient material and is adapted for sliding along and rotating about said column **3** by means of a column embracing portion generally designated **14** and consisting of two resiliently displaceable embracing arms **15** projecting from a container gripping portion generally designated **16**. Each of the embracing arms **15** comprises adjacent its end an inner annular segment **18**. A third annular segment **19** is rigidly connected by a rib **21** to said gripping portion **16**, whereby, the annular segments **18** and **19** form together a three-segment annular collar having a diameter slightly smaller than that of the column **3**. The ends of the embracing arms **15** are spaced from one another by gap **22** and have slanted edges **25** serving as gliding surfaces.

The arrangement is such that the connecting members **11** may be snappingly attached to the column **3** or detached therefrom by simply pushing or pulling the connecting member against the biasing embracing effect of the resilient gripping arms **15**. In this way, containers may be added, removed or rearranged along the column **3** without removing all the other containers.

The gripping portion **16** is of essentially of U-shaped cross-section and consists of a top surface **23** and a bottom surface **24** projecting essentially horizontally from a rear wall **26**. The distance between the surfaces **23** and **24** is essentially similar to the width of a standard compact-disk container. At the bottom surface **24**, adjacent the rear wall **26**, there is a groove **27** parallel to the wall **26** and the top surface **23** is formed with a downward projecting edge **28** and a groove **29**, both also being parallel to rear wall **26**.

Another embodiment of a connecting member according to the present invention is illustrated in Fig. 4, in which those components which are similar to those of the previous embodiment are designated with identical reference numerals. The second connecting member embodiment illustrated in Fig. 4 is also designed for gripping a compact-disk container and the difference between this embodiment and the one illustrated in Fig. 3 resides mainly in the gripping portion **16**. In this embodiment the connecting member has a circular cross-section shape and the gripping portion **16** similar to the previous embodiment is of U-shaped cross-section consisting of a top surface **23** and a bottom surface **24** projecting essentially horizontally from a rear wall **26**. The distance between the surfaces **23** and **24** is essentially similar to the width of a standard compact-disk container. The bottom surface **24**, is formed adjacent the rear wall **26** with a groove **27** parallel to the wall **26** and the top surface **23** is essentially flat with no groove.

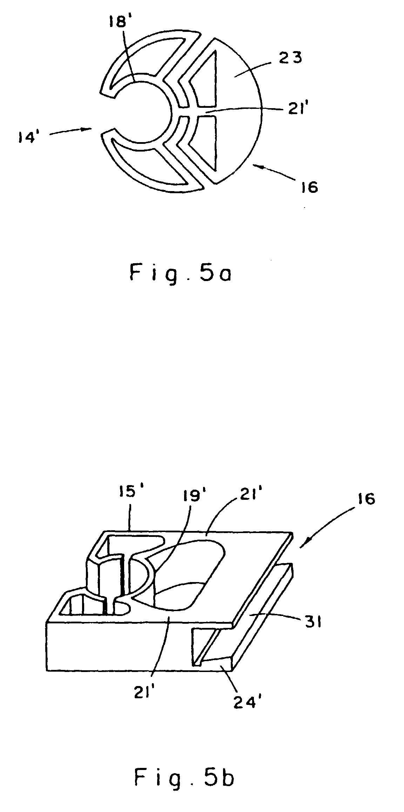

Figs. 5(a) to 5(c) are different modifications of the connecting members **11** hereinbefore described. All the connecting members **11** are made of a resilient material and are adapted for sliding along and rotating around the column **3** by means of an integral embracing portion **14** consisting of two displaceable embracing arms **15** formed with annular segments which together form an essentially annular cross-section shaped collar having an inner diameter similar or slightly smaller than that of the column's **3**.

The modification of Fig. 5(a) has also an essentially circular cross-section shape and it differs from the previous embodiments in the embracing portion **14'** which in this modification is constituted of a single wide angle annular segment **18'** attached by a central rib **21'** to the gripping portion **16**.

The modification of Fig. 5(b) differs from the embodiment of Fig. 4 in that it has an essential rectangular cross-section shape thus the embracing arms **15'** are right angled rather than arcs and the central annular segment **19'** is connected to the gripping portion **16** by two ribs **21'**. Still another difference is that a top face **31** of the bottom surface **24'** of the gripping portion **16** is slightly inclined so as to compensate for deflection of the connecting member due to the container's weight.

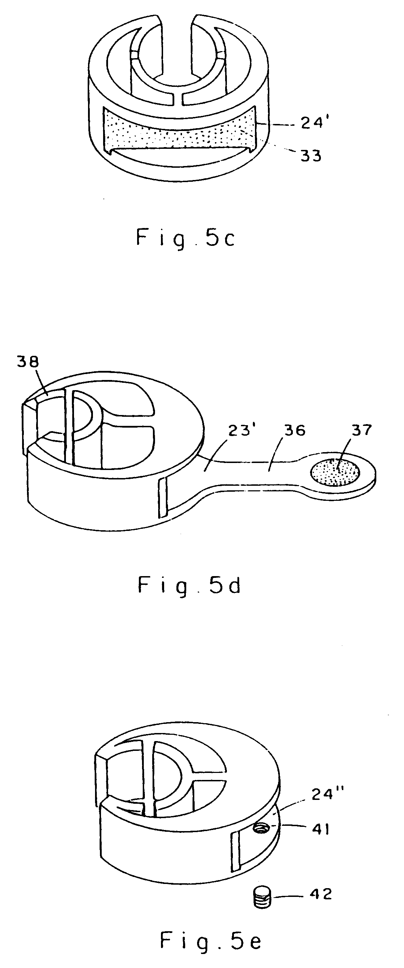

The connecting member **11** of Fig. 5(c) is formed with a rear wall **24'** provided with an adhesive substance **33** such as a double-faced glue strip or a Velcro™ adherent, for ensuring that the container (not seen) does not accidentally detach from the connecting member.

In Fig. 5(d) the bottom surface **23'** has a projecting tongue **36** and comprises an adhesive patch **37** also useful in securing the container to the connecting member. Alternatively, portion **37** may be a hook and pile attachment , also known as VELCRO ®. Furthermore, this modification illustrates how a spacer **38** may be integrally formed with the connecting member **11** instead of using the unitary spacers **13** as seen in Figs. 1 and 2.

In Fig. 5(e) the bottom surface **24''** is formed with a threaded bore **41** for accommodating a set screw **42** also useful in securing the container to the connecting member.

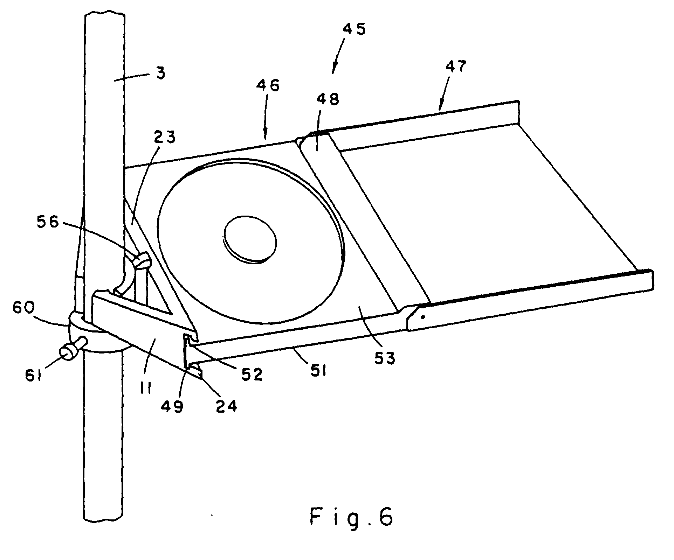

Reference is now made to Fig. 6 in which again, only for sake of example it will be explained how a typical compact-disk container **45** is gripped by a connecting member **11** attached to a column **3**. The container comprises a base member **46** and a flap **47** hinged at a rear portion **48** of the container. Such containers **45** are typically formed at all edges of at least the base member **46** with a ridge **49** projecting from the bottom surface **51**.

The container 45 is further provided at its front end with a ridge **52** vertically projecting from a top surface **53** of the base member **46**. Connecting the container to the connecting member is performed either by sliding the front edge of the container between the top surface **23** and bottom surface **24** of the connecting member or by snappingly attaching the container to the connecting member, whereby the ridges **49** and **52** are snugly accommodated within the grooves **27** and **29** respectively. In this way the container is attached to the connecting member and is horizontally retained with respect to the column **3**, where the flap **47** closes over the top surface **23** of the connecting member **11**.

The arrangement is such that since the top surface **23** and the bottom surface **24** are essentially as long as the width of the container, dust is prevented from penetrating into the container, when the flap **47** closes over the top surface **23** without any interstice therebetween.

As an option, a projecting member **56** is added above the top surface **23** for engaging the top surface of flap **47** in a snapping manner, whereby, closing and opening the flap require applying some pressure so that the flap does not open spontaneously and is better retained in its closed position.

As can also be seen in Fig. 6 instead of using the lower limit member **2** as seen in Figs. 1 and 2 there is provided a lower limit adjusting ring **60** comprising a fixing screw **61** by means of which the ring **60** may easily be fixed at any desired height for limiting the height of the lower-most connecting member.

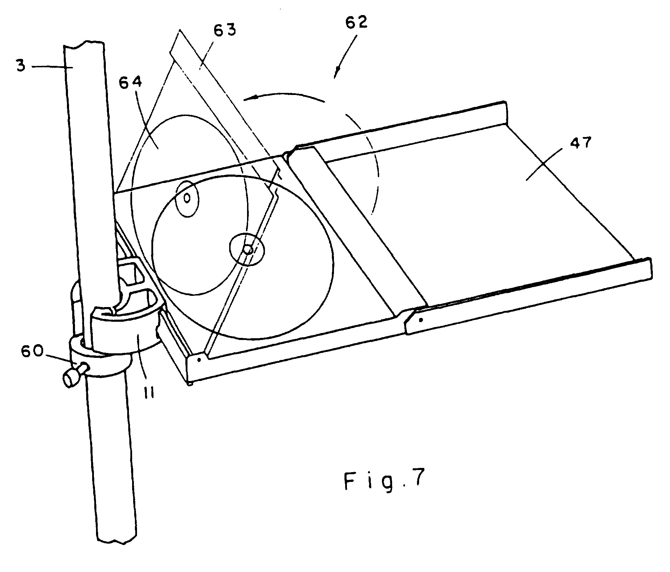

The connecting member **11** according to the embodiment of Fig. **3** is suitable also for use with a double compact-disk container **62** accommodating two compact-disks, as illustrated in Fig. 7. However, in Fig. 7 the connecting member has a circular cross-section shape but all the other features are similar to those of the embodiment of Fig.3. Using this type of containers **62**, the flap **47** is freely opened as well as the inner flap **63**, whereby, both disks **64** (only one of which is seen) are easily approachable as well as the booklet (not shown) normally enclosed with compact-disks and held in the flap **47**.

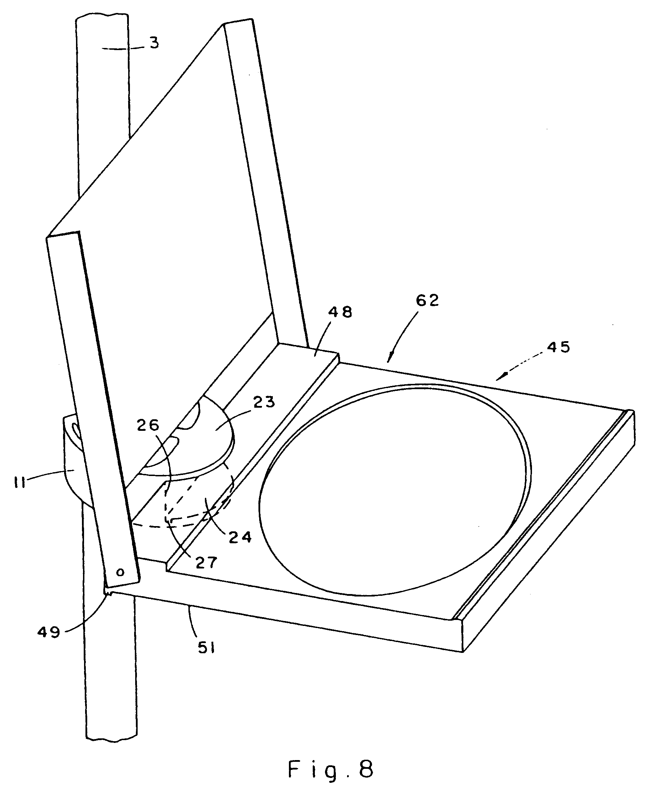

In Fig. 8 of the drawings it is seen how a connecting member according to the second embodiment (seen in Fig.4) is used for gripping a compact-disc container **62**. The container is attached to the connecting member **11** by snappingly inserting the rear portion **48** of the container into the gripping portion **16** of the connecting member whereby, the ridge **49** of the container's bottom surface **51** snaps into groove **27** and the top and bottom surfaces **23** and **24** respectively, clamp the end portion **48** of the container with the rear wall of the container bearing against the rear wall **26** of the connecting member. Detaching the container **45** from the connecting member **11** is carried out by applying force in an opposite direction to that of assembling.

The assembled compact-disk container **45** and connecting member **11** may than be snappingly attached to the column **3** as already explained whereby, the container is gripped essentially horizontally by the connecting member attached to the column **3** and may be removed from the column by simply pulling the container which results in detaching the connecting member from the column.

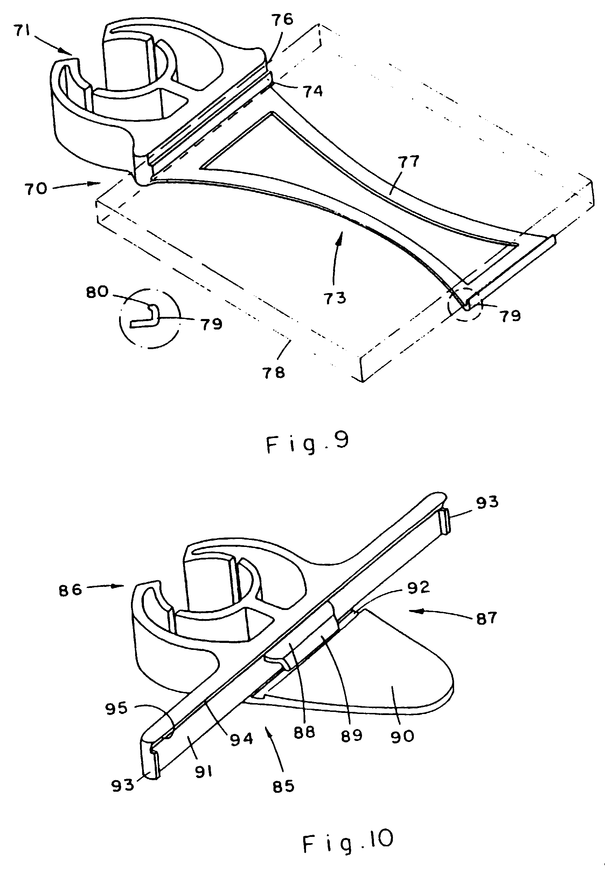

Fig. 9 illustrates another embodiment of a connecting member generally designated **70**, in which the embracing portion **71** may be, for example, similar to any one of the previous embodiments illustrated in Figs. 3-5.

However, in the present embodiment, the gripping portion **73** comprises at the rear wall **76** a flat substantially vertical surface **74** and an arm **77** laterally extending below the surface **74** and having a length substantially equal to the length of a container **78** illustrated by dashed lines. At the end of arm **74** there is a bracket **79** projecting upwards with a lateral projection **80** adapted for embracing the container **78** between said projection and the flat surface **74**.

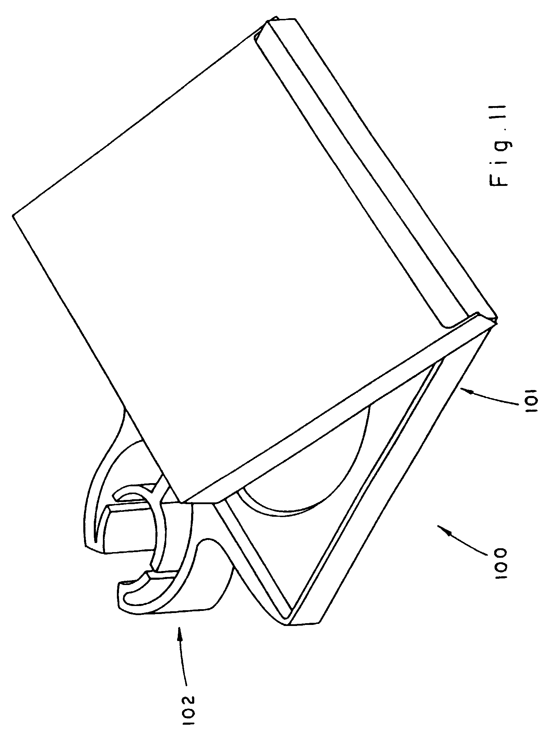

In the embodiment of Fig. 10, the connecting member generally designated **85** is provided with an embracing portion **86** as hereinbefore explained and a gripping portion **87** comprising a top support bracket **88** with a downward projecting ridge **89** and a bottom tongue **90** projecting from the rear wall **91** and formed adjacent the rear wall with a groove **92**, whereby the container (not shown) may be gripped as already explained in connection with the embodiment of Fig. 3.

The back wall **91** further comprises at each end thereof a lateral, vertical projection **93**, the distance between the vertical projections being equal to or slightly larger than the width of the compact disk container (not shown), useful for preventing movement of the container in the horizontal plane.

Adjacent to the top edge of the back wall **91**, above the top bracket **88**, there is a provided a longitudinal lateral projection **94** extending substantially the entire length of the back wall **91** and having a slanted bottom surface **95**. The purpose of the projection **94** is on the one hand to seal the interstice between the container and its hinged flip cover so as to prevent dust from entering the container and, on the other hand, to snappingly engage the cover of the container as it is closed. However, instead of a continuous projection **94**, several bulges may be used for the purpose of snapingly engaging the cover.

Attention is now directed to Fig. 11 of the drawings, in which the compact disk container generally designated **100** consists of a container portion **101** and an integrally formed embracing member **102** at a side of the container opposite the hinged side. Alternatively, the embracing member may be formed at the hinged side.

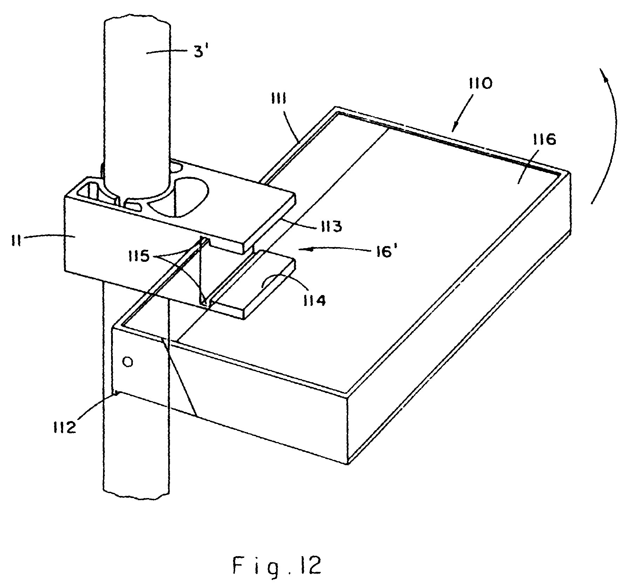

Fig. 12 of the drawings illustrates a connecting member according to the present invention suitable for gripping a typical audio cassette container **110**. The audio container is also formed at its top and bottom surfaces with upright projecting ridges **111** and **112** respectively and the top and bottom surfaces **113** and **114** of the connecting member are each provided with a groove **115**, the distance between the surfaces **113** and **114** being essentially similar or slightly less then the thickness of the container **110**.

When the container is forcefully introduced into the gripping portion **16'** the top and bottom ridges **111** and **112** snap into the grooves **115** whereby, the container is fixed to the connecting member and the flap **116** may be easily opened and its contents be drawn without detaching the container from the connecting member.

Because of the snapping engagement of the container within the connecting member effective gripping of the container is provided even if the thickness of the containers differs between manufacturers and designs.

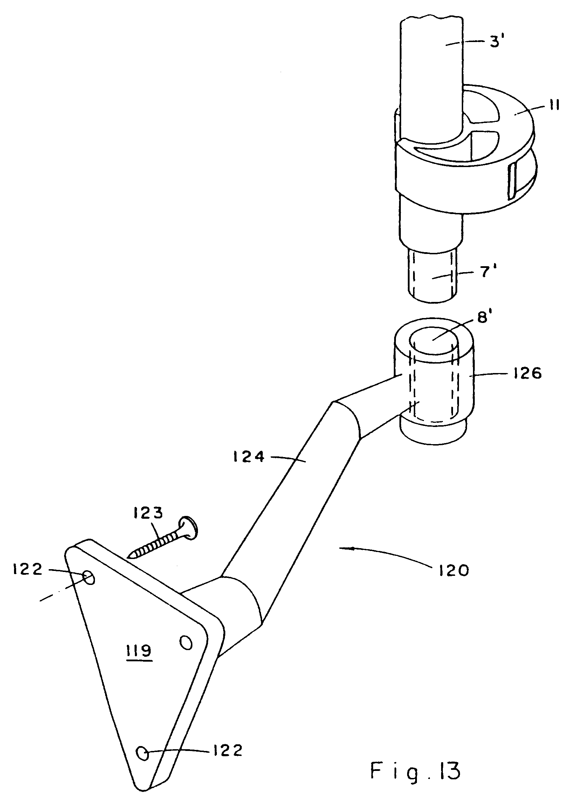

Fig. 13 illustrates how the storage and display device according to the present invention may be mounted on a wall, a bookcase or any other essentially vertical surface by means of a wall bracket mounting device **120** formed with a wall plate **121** with holes **122** for receiving screws **123** and an arm **124** fixed at one end thereof to said wall plate **121** and at the opposed end there is an internally threaded cup-like member **126** with a threaded bore **8'** adapted for receiving the threaded shank **7'** of the column **3'** as previously explained.

It should, however, be obvious that the storage and display device according to the present invention may be adapted by suitable means for floor and table-top mounting, suspension from a ceiling or table, for wall mounting etc.

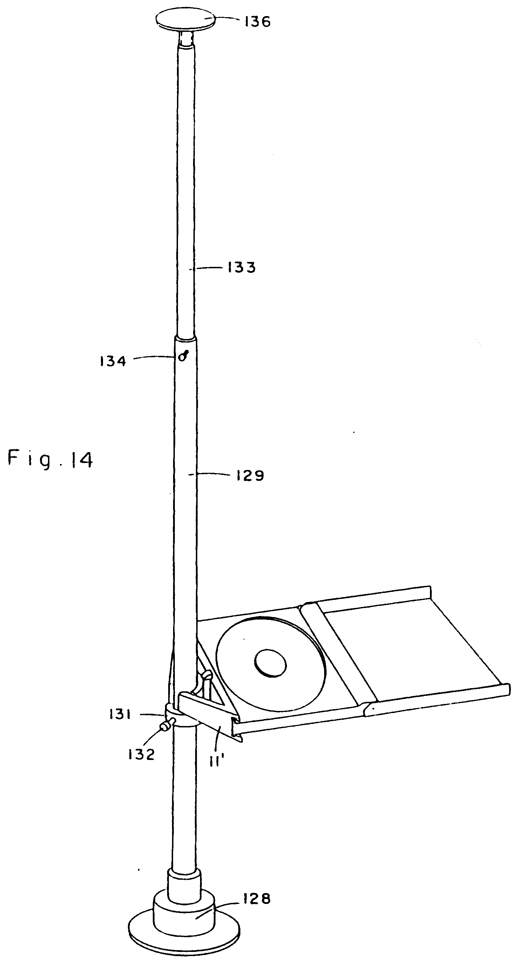

In Fig. 14 of the drawings there is provided a floor-to-ceiling device according to the present invention comprising a floor support 128, a column **129** with a lower limit adjusting ring **131** slidable along said column and fixable by means of the fixing screw **132** for setting the minimum height of the lower-most container on the column and a plurality of connecting members **11'** mounted on the column as previously explained (for illustration only one is shown). A tube **133** is telescopically received within the column **3'** and is fixed within the column by a fixing pin **134**. A height adjustable ceiling plate **136** may be screwed in or out of the tube **133** for fine height adjusting so as to obtain tight clamping between the ceiling and the floor(not shown). In this way even if a large number of containers is stored on the column, the device still remains steady. Other solutions may just as well be given to adjust the height of the device between the floor and ceiling.

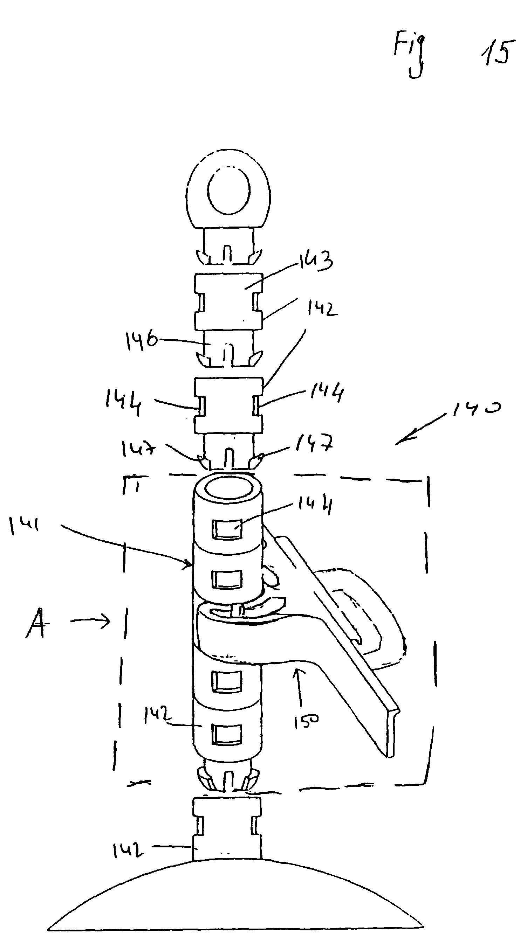

Referring now to Fig. 15 of the drawings, there is shown a floor/table top model device designated **140**, in which the column **141** consists of a plurality of column components **142**, each comprising at a top portion **143** two windows **144** and a bottom portion **146** having a reduced diameter adapted for accommodation within the top portion **143**. The bottom portion **146** comprises two flexible lateral projections **147** adapted for snap-fitting to mate so as to couple two consecutive column components **143** as seen in the perspective illustration of portion A.

As seen in Fig. 15, the top portion **143** of each column component **142** has substantially the height of a connecting member **150**, whereby the overall height of the column **141** conforms with that of the number of the containers held by the device. Each time it is required to add a container, a column component **143** is added.

It should be obvious to a person versed in the art that the column components and accessories may be connected to one another in a variety of different ways and not necessarily by screw engaging. It should further be obvious that the connecting members may vary in shape and design and may consist of any desired combination of the above mentioned modifications *mutatis mutandis*.

## Claims

1. A modular storage and display device for essentially flat containers (12) comprising a vertically retained column (3) and a plurality of connecting members (11) mounted on said column which connecting members are integrally formed at one portion thereof with means (18, 19) for mounting them on said column so as to be rotatable around and slidable along a longitudinal axis of the column and at an opposed portion of the connector with means (16) for horizontally retaining the container at any of its edges, characterized in that said said mounting means are formed with a pair of resiliently displaceable gripping arms (18) adapted to snap fit around the column.

2. A modular storage and display device according to Claim 1, wherein said column is extendible by a plurality of column components engageable with one another.

3. A modular storage and display device according to Claim 1, wherein said column is wall mounted by means of a wall bracket mounting device.

4. A modular storage and display device according to Claim 1 adapted for a floor-to-ceiling installation, where said column is extended so that it is supported at its ends by a base member and by a ceiling engaging member, respectively.

5. A modular storage and display device according to Claim 1 further comprising a base member for supporting said column on a floor or on a table top.

6. A modular storage and display device according to Claim 1 further comprising means for suspending the device from a desk top or from a ceiling.

7. A modular storage and display device according to Claim 1 further comprising at least one elevating member for setting the height of a lowermost connecting member.

8. A modular storage and display device according to Claim 1 further comprising a spacer between each two adjacent connecting members, said spacer being integral with the connecting member or being a separate element mounted on said column.

9. A modular storage and display device according to Claim 1 useful for containers such as compact disk, video and audio cassetts and the like, the container comprising a base member, front and rear walls and a hinged flap, wherein the retaining means of said connecting member consists of a U-shaped structure formed of a top and a bottom essentially horizontally extending supports, the distance between said supports being essentially equal to the thickness of the container, at least one of said supports being provided adjacent a rear wall of said retaining means with a grove suitable for snappingly receiving a ridge vertically projecting from an edge of the base member of said container; the arrangement being such that a rear edge portion of said container is engaged between said flat supports and the rear wall of said container bears against the rear wall of said retaining element.

10. A modular storage and display device according to Claim 1, where said container comprises a base member having front, rear and two side walls and a flap hinged adjacent a rear end thereof, wherein said retaining means is a U-like structure formed of a top and a bottom essentially horizontally extending supports, said top support comprising a groove suited for receiving a top edge of the container's front wall, the arrangement being such that said front wall is engaged by said retaining means with a front wall of the container bearing against a rear wall of said retaining means and with the container's hinged flap closable over said top support.

11. A modular storage and display device according to Claim 1, wherein attachment means are provided for attaching the container to said retaining means of the connecting member.

12. A modular storage and display device according to Claim 11, wherein said attachment means are adherent portions or hook and pile fastener portions.

13. A modular storage and display device according to Claim 11, wherein said attachment means is a set screw for clamping the container within said retaining means.

14. A modular storage and display device according to Claim 10, wherein said attachment means further comprises a longitudinal horizontal protrusion, extending essentially the entire width of the container and having a slanted bottom surface adapted for snapping engagement with a top surface of the container's flip cover.

15. A modular storage and display device according to Claim 10, wherein the rear wall of said connecting member further comprises a lateral and substantially vertical projection at each end thereof, suitable for arresting the container between said projections.

16. A modular storage and display device according to Claim 1, wherein said retaining means comprises a first vertical wall and a second vertical wall supported by an arm and positioned opposite said first vertical wall, the distance between the walls being essentially equal to a length of the container, whereby the container is retained between said and first second walls.

17. A modular storage and display device according to Claim 1, wherein said resiliently displaceable gripping arms consist of an essentially annular cross-sectioned element made of a resilient material and having an internal diameter similar to the diameter of said column and provided with at least one radial opening for snappingly receiving said column.

18. A modular storage and display device according to Claim 17 where said annular element comprises two resilient segments and one fixed segment.

19. A modular storage and display device according to Claim 3, wherein each of said column components has a height substantially equal to the height of a connecting member.

20. A connecting member for use in a modular storage and display device for essentially flat containers such as compact disk, video and audio cassette containers and the like, comprising an attachment for attachment to a substantially vertical column so as to be rotatable around and slidable along a longitudinal axis of said column and retaining means for retaining one such container at either of its rear, front or side wails, where the container is horizontally retained and opening of the flap and removal of the container's content is enabled while the container is retained by the connecting member, characterized in that said attachment is resilient and formed for snapping attachment to said column.

21. A connecting member according to Claim 20, wherein said retaining means consist of a top and a bottom essentially horizontally extending flat supports, the distance between said supports being essentially equal to the thickness of the container to be stored, at least one of said supports having an internal groove adjacent a rear wall of the retaining means for accommodating a ridge vertically projecting from a flat face of said container; the arrangement being such that a hinged edge of said container is retained between said flat supports and a rear face of said container bears against the rear wall of said clipping element.

22. A connecting member according to Claim 20, wherein said retaining means consist of a top and a bottom essentially horizontally extending flat supports, said top support comprising a groove adapted for receiving a top edge of a front face of said container, the arrangement being such that a front wall or a side wall of said container is retained by said retaining means with the retained wall bearing against the rear wall of the retaining means and with the container's hinged flap closing on said top support.

23. A connecting member according to Claim 20, wherein a rear wall of the retaining means comprises at each end thereof a lateral and substantially vertical projection for arresting the container between said projections and preventing movement of the container in a horizontal plane.

24. A connecting member according to Claim 20, wherein attachment means are provided for attaching the container to the retaining portion of the connecting member.

25. A connecting member according to Claim 24, wherein said attachment means is a set screw for clamping the container within said retaining means.

26. A connecting member according to claim 24, wherein said attachment means is an adherent portion or a hook and pile fastener portion.

27. A connecting member according to Claim 22, wherein the length of said top support is essentially as long as the width of the container.

28. A connecting member according to Claim 19, wherein said retaining means comprises a first vertical wall and a second vertical wall supported by an arm and positioned opposite said first wall, the distance between the walls being essentially equal to a length or a width of the container, whereby the container is retained between said first and second walls.

29. A connecting member according to Claim 22, further comprising a longitudinal horizontal protrusion, extending essentially the entire width of the container and having a slanted bottom surface adapted for snapping engagement with a top surface of the container's flip cover.

30. A connecting member according to Claim 19, wherein said resilient attachment member consist of an essentially annular cross-sectioned element made of a resilient material and having an internal diameter similar to the diameter of said column and provided with at least one radial opening for snappingly receiving said column.

## Patentansprüche

1. Modulare Lager- und Displayvorrichtung für im wesentlichen flache Behälter (12), die eine senkrecht gehaltene Säule (3) und eine Vielzahl von an der Säule angebrachten Verbindungselementen (11) umfaßt, wobei die Verbindungselemente an einem Abschnitt derselben mit Mitteln (18, 19) zu ihrer Anbringung an der Säule, um drehbar um eine und verschieblich entlang einer Längsachse der Säule zu sein, und an einem gegenüberliegenden Abschnitt des Verbinders mit Mitteln (16) zur horizontalen Halterung des Behälters an einer seiner Kanten einstückig ausgebildet sind, **dadurch gekennzeichnet,** daß die Befestigungsmittel mit einem Paar von elastisch auslenkbaren Greifarmen (18) ausgebildet sind, die angepaßt sind, um die Säule schnappend einzurasten.

2. Modulare Lager- und Displayvorrichtung nach Anspruch 1, wobei die Säule durch eine Vielzahl von Säulenteilen, die miteinander in Eingriff bringbar sind, verlängerbar ist.

3. Modulare Lager- und Displayvorrichtung nach Anspruch 1, wobei die Säule mittels einer Wandhalter-Befestigungsvorrichtung an einer Wand angebracht ist.

4. Modulare Lager- und Displayvorrichtung nach Anspruch 1, die für einen Einbau vom Boden bis zur Decke ausgebildet ist, wobei sich die Säule so erstreckt, daß sie an ihren Enden jeweils durch ein Basiselement und durch ein Deckeneingriffselement gehalten ist.

5. Modulare Lager- und Displayvorrichtung nach Anspruch 1, die des weiteren ein Basiselement zum Halten der Säule auf einem Boden oder einer Tischoberseite umfaßt.

6. Modulare Lager- und Displayvorrichtung nach Anspruch 1, die des weiteren Mittel zum Aufhängen der Vorrichtung von einer Tischoberseite oder von einer Decke umfaßt.

7. Modulare Lager- und Displayvorrichtung nach Anspruch 1, die des weiteren zumindest ein Hebeelement zur Festlegung der Höhe eines untersten Verbindungselements umfaßt.

8. Modulare Lager- und Displayvorrichtung nach Anspruch 1, die des weiteren einen Abstandshalter zwischen jeweils zwei benachbarten Verbindungselementen aufweist, wobei der Abstandshalter einstückig mit dem Verbindungselement ausgebildet ist oder ein an der Säule angebrachtes, separates Element ist.

9. Modulare Lager- und Displayvorrichtung nach Anspruch 1, die für Behälter wie beispielsweise Kompaktdiskkassetten, Video- und Audiokassetten und ähnlichem verwendbar ist, wobei der Behälter ein Basiselement, vordere und hintere Wände und eine schwenkbare Klappe aufweist und wobei die Haltemittel des Verbindungselements aus einer U-förmigen Struktur bestehen, die aus einem oberen und einem unteren, sich im wesentlichen horizontal erstreckenden Halter gebildet ist, der Abstand zwischen den Haltern im wesentlichen gleich der Dicke des Behälters ist, zumindest einer der Halter angrenzend an eine Rückwand des Haltemittels mit einer Nut versehen ist, die geeignet ist, einen von einer Rippe des Basiselements des Behälters in senkrechter Richtung vorspringenden Grad schnappend aufzunehmen; wobei die Anordnung derart ist, daß ein rückwärtiger Kantenabschnitt des Behälters zwischen den flachen Haltern in Eingriff kommt und die rückwärtige Wand des Behälters an der rückwärtigen Wand des Halteelements anliegt.

10. Modulare Lager- und Displayvorrichtung nach Anspruch 1, wobei der Behälter ein Basiselement mit vorderen, rückwärtigen und zwei seitlichen Wänden und mit einer Klappe umfaßt, die angrenzend an ein rückwärtiges Ende derselben schwenkbar angeordnet ist, wobei das Haltemittel eine U-förmige Struktur ist, die aus einem oberen und einem unteren, sich im wesentlichen in horizontaler Richtung erstreckenden Halter gebildet ist, wobei der obere Halter eine Nut umfaßt, die zur Aufnahme einer oberen Kante der vorderen Wand des Behälters geeignet ist, wobei die Anordnung derart ist, daß die vordere Wand mit dem Haltemittel in Eingriff kommt, wobei eine vordere Wand des Behälters an einer rückwärtigen Wand des Haltemittels anliegt und die schwenkbare Klappe des Behälters über den oberen Halter schließbar ist.

11. Modulare Lager- und Displayvorrichtung nach Anspruch 1, wobei zur Anbringung des Behälters am Haltemittel des Verbindungselements Befestigungsmittel vorgesehen sind.

12. Modulare Lager- und Displayvorrichtung nach Anspruch 11, wobei die Befestigungsmittel Klebeabschnitte oder Verschlußabschnitte mit Haken und Schlaufen sind.

13. Modulare Lager- und Displayvorrichtung nach Anspruch 11, wobei das Befestigungsmittel eine Klemmschraube zum Klemmen des Behälters innerhalb des Haltemittels ist.

14. Modulare Lager- und Displayvorrichtung nach Anspruch 10, wobei das Befestigungsmittel des weiteren einen länglichen, horizontalen Vorsprung aufweist, der sich im wesentlichen über die gesamte Weite des Behälters erstreckt und eine abgeschrägte Bodenfläche aufweist, die für einen schnappenden Eingriff mit einer oberen Fläche der Klappabdeckung des Behälters ausgebildet ist.

15. Modulare Lager- und Displayvorrichtung nach Anspruch 10, wobei die rückwärtige Wand des Verbindungselements des weiteren einen seitlichen und im wesentlichen senkrechten Vorsprung an jedem Ende derselben aufweist, die zur Arretierung des Behälters zwischen den Vorsprüngen geeignet sind.

16. Modulare Lager- und Displayvorrichtung nach Anspruch 1, wobei das Haltemittel eine erste senkrechte Wand und eine zweite von einem Arm gehaltene und gegenüber der ersten senkrechten Wand angeordnete senkrechte Wand aufweist, wobei der Abstand zwischen den Wänden im wesentlichen gleich einer Länge des Behälters ist und der Behälter zwischen der ersten und zweiten Wand gehalten ist.

17. Modulare Lager- und Displayvorrichtung nach Anspruch 1, wobei die elastisch auslenkbaren Greifarme aus einem Element mit im wesentlichen ringförmigen Querschnitt bestehen, das aus einem elastischen Werkstoff gefertigt ist und einen Innendurchmesser aufweist, der ähnlich dem Durchmesser der Säule ist, und das mit zumindest einer radialen Öffnung zur schnappenden Aufnahme der Säule versehen ist.

18. Modulare Lager- und Displayvorrichtung nach Anspruch 17, wobei das ringförmige Element zwei elastische Segmente und ein festes Segment umfaßt.

19. Modulare Lager- und Displayvorrichtung nach Anspruch 3, wobei jedes Säulenteil eine Höhe aufweist, die im wesentlichen gleich der Höhe eines Verbindungselements ist.

20. Verbindungselement zur Verwendung bei einer modularen Lager- und Displayvorrichtung für im wesentlichen flache Behälter, wie beispielsweise Kompaktdisks, Behältern für Video- und Audiokassetten und ähnlichem, das eine Befestigung zur Befestigung an einer im wesentlichen senkrechten Säule aufweist, so daß es drehbar um eine und verschiebbar entlang einer Längsachse der Säule ist, und Haltemittel zum Halten eines solchen Behälters an einer seiner rückwärtigen, vorderen oder seitlichen Wände umfaßt, wobei der Behälter horizontal gehalten ist und ein Öffnen der Klappe und ein Entfernen des Behälterinhalts möglich ist, während der Behälter durch das Verbindungselement gehalten ist, **dadurch gekennzeichnet,** daß die Befestigung elastisch ist und zur schnappenden Befestigung an der Säule ausgebildet ist.

21. Verbindungselement nach Anspruch 20, wobei das Haltemittel aus einem oberen und einem unteren, sich im wesentlichen in horizontaler erstreckenden, flachen Halter besteht, wobei der Abstand zwischen den Halter im wesentlichen gleich der Dicke des zu lagernden Behälters ist, zumindest eine der Halter eine innere Nut angrenzend zu einer rückwärtigen Wand des Haltemittels zur Aufnahme einer Rippe aufweist, die in senkrechter Richtung von einer ebenen Sintfläche des Behälters vorspringt; wobei die Anordnung so ist, daß eine schwenkbare Kante des Behälters zwischen den ebenen Halter gehalten ist und eine rückwärtige Fläche des Behälters an der rückwärtigen Wand des Schnappelements anliegt.

22. Verbindungselement nach Anspruch 20, wobei das Haltemittel aus einem oberen und einem unteren, sich im wesentlichen in horizontaler Richtung erstreckenden, ebenen Halter besteht, wobei der obere Halter eine Nut umfaßt, die zur Aufnahme einer oberen Kante einer vorderen Stirnfläche des Behälters ausgebildet ist, wobei die Anordnung derart ist, daß eine vordere Wand oder eine seitliche Wand des Behälters durch das Haltemittel gehalten ist, während die gehaltene Wand gegen die rückwärtige Wand des Haltemittels drückt und sich die schwenkbare Klappe des Behälters über den oberen Halter schließt.

23. Verbindungselement nach Anspruch 20, wobei eine rückwärtige Wand des Haltemittels an jedem Ende derselben einen seitlichen und im wesentlichen senkrechten Vorsprung zur Arretierung des Behälters zwischen den Vorsprüngen und zur Verhinderung einer Bewegung des Behälters in einer waagerechten Ebene aufweist.

24. Verbindungselement nach Anspruch 20, wobei Befestigungsmittel zur Befestigung des Behälters am Halteabschnitt des Verbindungselements vorgesehen sind.

25. Verbindungselement nach Anspruch 24, wobei das Befestigungsmittel eine Klemmschraube zum Klemmen des Behälters innerhalb des Haltemittels ist.

26. Verbindungselement nach Anspruch 24, wobei das Befestigungsmittel ein Klebeabschnitt oder ein Verschlußabschnitt mit Haken und Schlaufen ist.

27. Verbindungselement nach Anspruch 22, wobei die Länge des oberen Halters im wesentlichen so groß wie die Weite des Behälters ist.

28. Verbindungselement nach Anspruch 19, wobei das Haltemittel eine erste senkrechte Wand und eine zweite senkrechte Wand, die von einem Arm gehalten und gegenüber der ersten Wand angeordnet ist, umfaßt, wobei der Abstand zwischen den Wänden im wesentlichen gleich einer Länge oder einer Weite des Behälters ist, wobei der Behälter zwischen der ersten und zweiten Wand gehalten ist.

29. Verbindungselement nach Anspruch 22, das des weiteren einen in Längsrichtung verlaufenden, horizontalen Vorsprung aufweist, der sich im wesentlichen über die gesamte Weite des Behälters erstreckt und eine abgeschrägte Bodenfläche aufweist, die zum schnappenden Eingriff mit einer oberen Fläche der Klappabdeckung des Behälters ausgebildet ist.

30. Verbindungselement nach Anspruch 19, wobei das elastische Befestigungselement aus einem Element mit im wesentlichen ringförmigen Querschnitt besteht, das aus einem elastischen Werkstoff gefertigt ist und einen Innendurchmesser ähnlich dem Durchmesser der Säule aufweist und mit zumindest einer radialen Öffnung zur schnappenden Aufnahme der Säule versehen ist.

## Revendications

1. Un dispositif modulaire de rangement et présentoir pour des conteneurs (12) pratiquement plats, comprenant une colonne (3) fixée verticalement et une pluralité d'organes de liaison (11) montés sur ladite colonne, les organes de liaison étant munis à une partie (2) de moyens (18, 19) formés d'un seul tenant pour les monter sur ladite colonne de manière à pouvoir tourner et à pouvoir glisser sur un axe longitudinal de la colonne et, à une partie opposée du connecteur, de moyens (16) pour retenir horizontalement le conteneur sur l'un quelconque de ses bords, caractérisé en ce que lesdits moyens de montage sont constitués d'une paire de bras de saisie (18) déplaçables élastiquement, adaptés pour se monter avec encliquetage autour de la colonne.

2. Un dispositif modulaire de rangement et présentoir selon la revendication 1, dans lequel ladite colonne est extensible à l'aide d'une pluralité de composants de colonne, susceptibles d'être engagés les uns avec les autres.

3. Un dispositif modulaire de rangement et présentoir selon la revendication 1, dans lequel ladite colonne est montée sur une paroi au moyen d^{'}un dispositif de montage à console murale.

4. Un dispositif modulaire de rangement et présentoir selon la revendication 1, adapté pour une installation de plancher à plafond, dans lequel ladite colonne est étendue de manière à être supportée à ses extrémités par un organe de base et par un organe de mise en prise de plafond, respectivement.

5. Un dispositif modulaire de rangement et présentoir selon la revendication 1, comprenant en outre un organe de base pour supporter ladite colonne sur un plancher ou le dessus d'une table.

6. Un dispositif modulaire de rangement et présentoir selon la revendication 1, comprenant en outre des moyens pour suspendre le dispositif à un plateau de bureau ou à un plafond.

7. Un dispositif modulaire de rangement et présentoir selon la revendication 1, comprenant en outre au moins un organe d'élévation pour fixer la hauteur d'un organe de liaison placé à la position la plus basse.

8. Un dispositif modulaire de rangement et présentoir selon la revendication 1, comprenant en outre un organe d'espacement entre chaque paire d'organes de liaison adjacents, ledit organe d'espacement étant réalisé d'une seule pièce avec l'organe de liaison ou étant un élément séparé monté sur ladite colonne.

9. Un dispositif modulaire de rangement et présentoir selon la revendication 1, utile pour des conteneurs comme des cassettes de disque compact, des cassettes vidéo et audio et analogues, le conteneur comprenant un organe de base, des parois avant et arrière et un volet articulé, dans lequel les moyens de retenue dudit organe de liaison sont constitués d'une structure en forme de U formée de supports supérieur et inférieur s'étendant sensiblement horizontalement, la distance entre lesdits supports étant sensiblement égale à l'épaisseur du conteneur, au moins l'un desdits supports étant adjacent à la paroi arrière desdits moyens de retenue, avec une gorge convenant pour recevoir avec encliquetage une nervure saillant verticalement d'un bord de l'organe de base dudit conteneur; l'agencement étant tel qu'une partie de bord arrière dudit conteneur est mise en prisé entre lesdits supports plats et la paroi arrière dudit conteneur porte contre la paroi arrière dudit élément de retenue.

10. Un dispositif modulaire de rangement et présentoir selon la revendication 1, dans lequel ledit conteneur comprend un organe de base ayant des parois avant, arrière et deux parois latérales, et un volet articulé au voisinage de son extrémité arrière, dans lequel lesdits moyens de retenue sont une structure en forme de U, formée de supports supérieurs et inférieurs s'étendant sensiblement horizontalement, ledit support supérieur comprenant une rainure convenant pour recevoir un bord supérieur de la paroi avant du conteneur, l'agencement étant tel que ladite paroi avant est mise en prise par lesdits moyens de retenue, une paroi avant du conteneur portant contre une paroi arrière desdits moyens de retenue, et le volet articulé du conteneur étant susceptible d'être refermé sur ledit support supérieur.

11. Un dispositif modulaire de rangement et présentoir selon la revendication 1, dans lequel des moyens de fixation sont prévus pour fixer le conteneur auxdits moyens de retenue dudit élément de liaison.

12. Un dispositif modulaire de rangement et présentoir selon la revendication 11, dans lequel lesdits moyens de fixation sont des parties adhérentes ou des parties d'organe de fixation à crochet et à pilier.

13. Un dispositif modulaire de rangement et présentoir selon la revendication 11, dans lequel lesdits moyens de fixation sont constitués d'une vis de réglage pour serrer le conteneur dans lesdits moyens de retenue.

14. Un dispositif modulaire de rangement et présentoir selon la revendication 10, dans lequel lesdits moyens de fixation comprennent en outre une saillie horizontale longitudinale, s'étendant sensiblement sur toute la largeur du conteneur et ayant une surface inférieure élancée adaptée pour un engagement avec encliquetage avec une surface supérieure du couvercle rabattable du conteneur.

15. Un dispositif modulaire de rangement et présentoir selon la revendication 10, dans lequel la paroi arrière dudit organe de liaison comprend en outre à chacune de ses extrémités une saillie latérale et sensiblement verticale, convenant pour fixer le conteneur entre lesdites saillies.

16. Un dispositif modulaire de rangement et présentoir selon la revendication 1, dans lequel lesdits moyens de retenue comprennent une première paroi verticale et une deuxième paroi verticale supportée par un bras et positionnée à l'opposé de ladite première paroi verticale, la distance entre les parois étant sensiblement égale à la longueur du conteneur, de manière que le conteneur soit retenu entre lesdites première et deuxième parois.

17. Un dispositif modulaire de rangement et présentoir selon la revendication 1, dans lequel lesdits bras de saisie, déplaçables élastiquement, sont constitués d'un élément à section transversale sensiblement annulaire constitué d'un matériau élastique et ayant un diamètre intérieur similaire au diamètre de ladite colonne et doté d'au moins une ouverture radiale pour recevoir avec encliquetage ladite colonne.

18. Un dispositif modulaire de rangement et présentoir selon la revendication 17, dans lequel ledit élément annulaire comprend deux segments élastiques et un segment fixe.

19. Un dispositif modulaire de rangement et présentoir selon la revendication 3, dans lequel chacun desdits composants de colonne a une hauteur sensiblement égale à la hauteur d'un élément de liaison.

20. Un élément de liaison, pour utilisation dans un dispositif modulaire de rangement et présentoir, pour des conteneurs sensiblement plats tels que des conteneur pour des disques compacts, cassettes vidéo et audio et analogues, comprenant une fixation pour fixer à une colonne sensiblement verticale, de manière à pouvoir tourner et à coulisser le long d'un axe longitudinal de ladite colonne, et des moyens de retenue pour retenir un conteneur de ce type, soit sur ses parois arrière, avant ou latérales, où le conteneur est retenu horizontalement et l'ouverture du volet et l'enlèvement du contenu du conteneur sont autorisés lorsque le conteneur est retenu par l'élément de liaison, caractérisé en ce que ladite fixation est élastique et est formée pour une fixation avec encliquetage à ladite colonne.

21. Un élément de liaison selon la revendication 20, dans lequel lesdits moyens de retenue sont constitués de supports plats supérieur et inférieur s'étendant sensiblement horizontalement, la distance entre lesdits supports étant sensiblement égale à l'épaisseur du conteneur à stocker, au moins l'un desdits supports ayant une rainure interne adjacente à une paroi arrière des moyens de retenue pour loger une nervure faisant saillie verticalement d'une face plate dudit conteneur; l'agencement étant tel qu'un bord articulé dudit conteneur est retenu entre lesdits supports plats et une face arrière dudit conteneur porte contre la paroi arrière dudit élément à encliquetage.

22. Un élément de liaison selon la revendication 20, dans lequel lesdits moyens de retenue sont constitués de supports plats supérieur et inférieur s'étendant sensiblement horizontalement, ledit support supérieur comprenant une rainure adaptée pour recevoir un bord supérieur d'une face avant dudit conteneur, l'agencement étant tel qu'une paroi avant ou une paroi latérale dudit conteneur est retenue par lesdits moyens de retenue, la paroi retenue portant contre la paroi arrière des moyens de retenue et le volet articulé du conteneur se fermant sur ledit support supérieur.

23. Un élément de liaison selon la revendication 20, dans lequel une paroi arrière des moyens de retenue est constituée, à chaque extrémité de ceux-ci, d'une saillie latérale et sensiblement verticale, pour fixer le conteneur entre lesdites saillies et empêcher tout déplacement du conteneur dans un plan horizontal.

24. Un élément de liaison selon la revendication 20, dans lequel les moyens de fixation sont prévus pour fixer le conteneur à la partie de retenue de l'élément de liaison.

25. Un élément de liaison selon la revendication 24, dans lequel lesdits moyens de fixation sont une vis de réglage pour serrer le conteneur dans lesdits moyens de retenue.

26. Un élément de liaison selon la revendication 24, dans lequel lesdits moyens de fixation sont une partie adhérente d'une partie de fixation à crochet et à pilier.

27. Un élément de liaison selon la revendication 22, dans lequel la longueur dudit support supérieur est sensiblement identique à la largeur du conteneur.

28. Un élément de liaison selon la revendication 19, dans lequel lesdits moyens de retenue sont constitués d'une première paroi verticale et d'une deuxième paroi verticale supportée par un bras et positionnée à l'opposé de ladite première paroi, les distances entre les parois étant sensiblement égales à une longueur ou à une largeur du conteneur, de manière que le conteneur soit retenu entre lesdites première et deuxième parois.

29. Un élément de liaison selon la revendication 22, comprenant en outre une saillie horizontale longitudinale s'étendant sensiblement sur toute la largeur du conteneur et ayant une surface inférieure élancée adaptée pour une mise en prise avec encliquetage avec une surface supérieure du couvercle articulé du conteneur.

30. Un élément de liaison selon la revendication 19, dans lequel ledit organe de fixation élastique est constitué d'un élément à section transversale sensiblement annulaire, constitué d'un matériau élastique et ayant un diamètre intérieur similaire au diamètre de ladite colonne et doté d'au moins une ouverture radiale pour recevoir avec encliquetage ladite colonne.
